# EUROPÄISCHE PATENTSCHRIFT

(11) **EP 2 036 771 B1**
(45) Veröffentlichungstag und Bekanntmachung des Hinweises auf die Patenterteilung: **17.03.2010**
(21) Anmeldenummer: 08015465.1
(22) Anmeldetag: 02.09.2008
(51) Int. Cl.: B60R 5/04

(54) **Schutzvorrichtung für einen Innenraum eines Kraftfahrzeugs und Führungsanordnung hierfür**
Protection device for the interior of a motor vehicle and guide assembly for the same
Dispositif de protection pour un espace intérieur d'un véhicule automobile et dispositif de guidage correspondant

(30) Priorität: 12.09.2007 DE 102007045046
(43) Veröffentlichungstag der Anmeldung: 18.03.2009
(73) Patentinhaber: BOS GmbH & Co. KG, 73760 Ostfildern (DE)
(72) Erfinder: Belibel, Bouaziz, 73116 Wäschenbeuren (DE); Syrouchidis, Stilianos, 71334 Waiblingen (DE)
(74) Vertreter: Wilhelm, Peter

(56) Entgegenhaltungen:
- EP-A- 1 112 876
- WO-A-2005/113292
- WO-A-2007/006333
- DE-A1- 3 044 282
- JP-A- 2003 246 516

## Beschreibung

Die Erfindung betrifft eine Schutzvorrichtung für einen Innenraum eines Kraftfahrzeugs mit einem zwischen einer kompakt abgelegten Ruheposition und wenigstens einer zumindest teilweise ausgezogenen Funktionsposition beweglich gelagerten, flexiblen Flächengebilde, das wenigstens abschnittsweise mittels Führungselementen in fahrzeugseitigen Längsführungen für eine Vor- oder Rückbewegung beidseitig geführt ist, sowie eine Führungsanordnung für eine derartige Schutzvorrichtung.

Eine solche Schutzvorrichtung ist aus dem offenbarten Dokument WO 2005/113292 bekannt.

Unter Schutzvorrichtungen im Sinne der Erfindung sind insbesondere Laderaumabdeckungen, etwa vertikal aufspannbare Trennvorrichtungen zwischen Laderaum und Fahrgastraum sowie Sonnenschutzvorrichtungen für Fahrzeugscheiben oder für transparente Dachbereiche zu verstehen.

Es sind Laderaumabdeckungen für Kraftfahrzeuge bekannt, bei denen ein flexibles Flächengebilde in Form einer Abdeckplane auf einer Wickelwelle auf- und abwickelbar gelagert ist. Die Wickelwelle ist in einem fahrzeugfest gehaltenen Kassettengehäuse drehbar gelagert und in Aufwickelrichtung durch eine Wickelfeder drehmomentbelastet. Ein in Auszugrichtung vorderer Stirnendbereich der Abdeckplane ist mit einem formstabilen Auszugprofil versehen, das beidseitig mit Führungszapfen versehen ist, die über entsprechende Seitenrandbereiche der Abdeckplane seitlich nach außen abragen. Diese Führungszapfen sind in fahrzeugfesten Längsführungen verschiebbar gelagert. Eine Ausziehbewegung der Abdeckplane aus ihrer aufgewickelten Ruheposition erfolgt manuell über einen Griffbereich an dem Auszugprofil. In der ausgezogenen Endposition sind die Führungszapfen des Auszugprofils formschlüssig an entsprechenden, fahrzeugseitigen Sicherungselementen blockiert. Um die Abdeckplane aus der ausgezogenen Endposition wieder in die Ruheposition zu überführen, werden die Führungszapfen des Auszugprofils in einfacher Weise von den Sicherungselementen gelöst. Anschließend bewirkt die Wickelfeder im Bereich der Wickelwelle eine Rückholbewegung der Abdeckplane, wodurch die Abdeckplane selbsttätig auf die Wickelwelle aufgewickelt wird.

Aufgabe der Erfindung ist es, eine Schutzvorrichtung der eingangs genannten Art zu schaffen, die eine besser kontrollierbare Rückbewegung in die kompakt abgelegte Ruheposition ermöglicht.

Diese Aufgabe wird dadurch gelöst, dass den Führungselementen Bremsmittel zugeordnet sind, die zumindest über einen Teilabschnitt eines Vor- oder Rückweges des Flächengebildes eine Erhöhung eines Reibschlusses zwischen Führungselementen und Längsführungen bewirken. Dadurch wird eine Einfahr- oder Rückholbewegung des Flächengebildes aus der zumindest teilweise ausgezogenen Funktionsposition in Richtung der kompakt abgelegten Ruheposition gebremst. Die Rückbewegung des Flächengebildes ist damit nicht mehr ausschließlich abhängig von einem entsprechenden Rückholantrieb wie einer als Rückholfeder dienenden Wickelfeder einer Wickelwelle oder ähnlichem.

In Ausgestaltung der Erfindung sind die Bremsmittel den Längsführungen und/oder den Führungselementen zugeordnet. Damit können die Bremsmittel entweder stationär fahrzeugseitig oder gemeinsam mit dem Flächengebilde beweglich angeordnet sein. Alternativ können die Bremsmittel auch als Kombination von Bremselementen im Bereich der Führungselemente und im Bereich der Längsführungen gestaltet sein.

In weiterer Ausgestaltung der Erfindung umfassen die Bremsmittel abschnittsweise Veränderungen von Führungsquerschnitten der Längsführungen. Vorzugsweise sind die Längsführungen als nut- oder schlitzförmige Hohlprofile ausgeführt. Verengungen dieser Hohlprofile und entsprechend erweiterte Abschnitte führen zu reduzierter oder erhöhter Reibung der Führungselemente während einer Gleit- oder Rollbewegung in den Längsführungen, so dass in den gewünschten Abschnitten eine beabsichtigte Bremswirkung erzielbar ist.

In weiterer Ausgestaltung der Erfindung umfassen die Bremsmittel abschnittsweise Veränderungen der Reibkoeffizienten von Führungsflächen der Längsführungen. In Wegabschnitten mit erhöhter Reibung ist zwangsläufig eine Bremswirkung bei einer entsprechenden Längsbewegung der Führungselemente des Flächengebildes erzielbar.

In weiterer Ausgestaltung der Erfindung umfassen die den Führungselementen zugeordneten Bremsmittel beweglich angeordnete Stützteile, die an entsprechenden Führungsflächen der Längsführungen anliegen, und die mit voneinander beabstandeten Bereichen unterschiedlicher Reibkoeffizienten versehen sind. Die bewegliche Anordnung der Stützteile ermöglicht - je nach Bedarf - eine mehr oder weniger starke Bremswirkung, indem jeweils ein Bereich mit höherem oder ein Bereich mit niedrigerem Reibkoeffizienten zur Anlage kommt.

In weiterer Ausgestaltung der Erfindung sind die unterschiedlichen Reibkoeffizienten der Stützteilbereiche durch Gleitreibungs- und Rollreibungsbereiche gebildet. Die Führungselemente liegen somit entweder mit Gleitreibungs- oder mit Rollreibungswiderstand an den Führungsflächen in Form von Oberflächen der Führungsquerschnitte der Längsführungen an.

In weiterer Ausgestaltung der Erfindung sind die beweglich gelagerten Stützteile in Anlagerichtung zu den Führungsflächen der Längsführungen federkraftbeaufschlagt. Dadurch ist eine permanente Anlage der Stützteile an den entsprechenden Führungsflächen der Längsführungen gewährleistet.

In weiterer Ausgestaltung der Erfindung sind die Bremsmittel mit den Längsführungen einstückig oder zu diesen getrennt ausgeführt. Die Bremsmittel können somit Teil der Längsführungen sein, indem sie durch entsprechende Formung oder Gestaltung der Längsführungen gebildet sind. Alternativ können sie als getrennte Bauteile ausgeführt sein und mittels entsprechender Verbindungsmittel an oder in den Führungsquerschnitten der Längsführungen befestigt sein.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt schematisch in perspektivischer Darstellung einen Aus- schnitt eines Innenraumes eines Kraftfahrzeugs im Bereich einer als Laderaumabdeckung gestalteten, erfindungsgemäßen Schutzvorrichtung,
- Fig. 2: in vergrößerter, schematischer Darstellung einen Ausschnitt der Schutzvorrichtung nach Fig. 1,
- Fig. 3: den Ausschnitt nach Fig. 2 in einer Frontansicht,
- Fig. 4: ein Führungselement einer weiteren Ausführungsform einer er- findungsgemäßen Schutzvorrichtung ähnlich Fig. 2,
- Fig. 5: schematisch in einem Längsschnitt ein Führungselement in ei- nem Führungsquerschnitt einer Längsführung einer Ausfüh- rungsform einer erfindungsgemäßen Schutzvorrichtung,
- Fig. 6: Führungselement und Längsführung einer weiteren Ausfüh- rungsform einer erfindungsgemäßen Schutzvorrichtung ähnlich Fig. 5,
- Fig. 7: Führungselement und Längsführung ähnlich Fig. 6 für eine wei- tere Ausführungsform einer erfindungsgemäßen Schutzvorrich- tung,
- Fig. 8: Führungselement und Längsführung einer weiteren Ausfüh- rungsform einer erfindungsgemäßen Schutzvorrichtung ähnlich Fig. 6 und
- Fig. 9a und 9b: schematisch eine weitere Führungsanordnung aus Füh- rungselement und Längsführung mit unterschiedlich wirksamen Bremsmitteln gemäß einer letzten Ausführungsform einer erfin- dungsgemäßen Schutzvorrichtung.

Ein Personenkraftwagen in Form eines Kombi-Personenkraftwagens, eines Sports Utility Vehicle, eines Vans oder einer Großraumlimousine weist in seinem Fahrzeuginnenraum sowohl einen Fahrgastraum als auch einen Laderaum auf. Der Laderaum befindet sich in einem Heckbereich des Fahrzeuginnenraumes und ist in Fahrzeuglängsrichtung nach vorne durch eine Rückenlehnenanordnung 1 einer Fondsitzbank von dem Fahrgastraum getrennt. Unmittelbar hinter der Rückenlehnenanordnung 1 ist ein Kassettengehäuse 2 fahrzeugfest angeordnet, in dem in nicht näher dargestellter Weise eine Wickelwelle um eine in Fahrzeugquerrichtung ausgerichtete Drehachse drehbar gelagert ist. Auf der Wickelwelle ist ein flexibles Flächengebilde 3, vorliegend in Form einer Abdeckplane, auf- und abwickelbar gehalten, das durch einen Längsschlitz des Kassettengehäuses 2 zu einem Heckbereich etwa horizontal nach hinten ausziehbar ist.

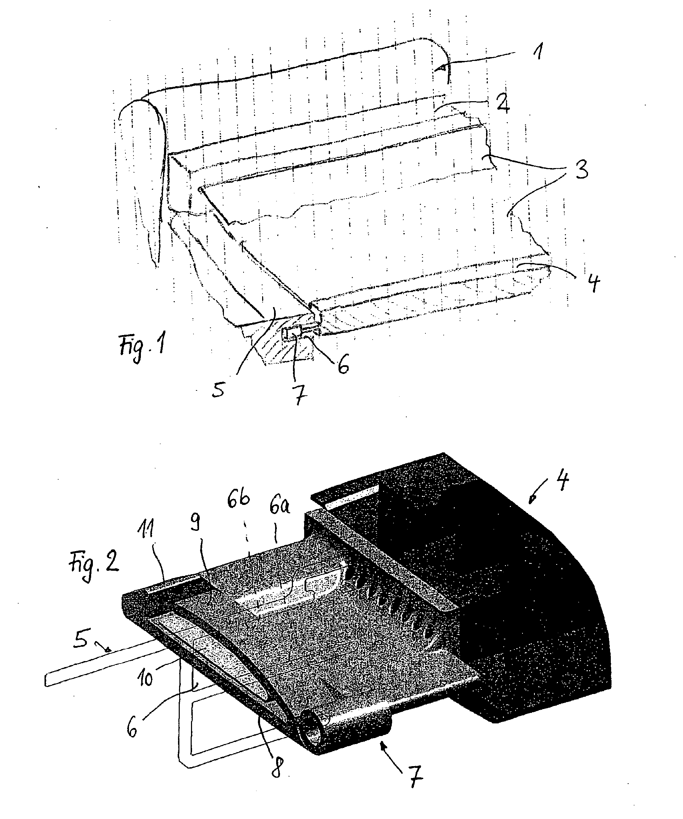

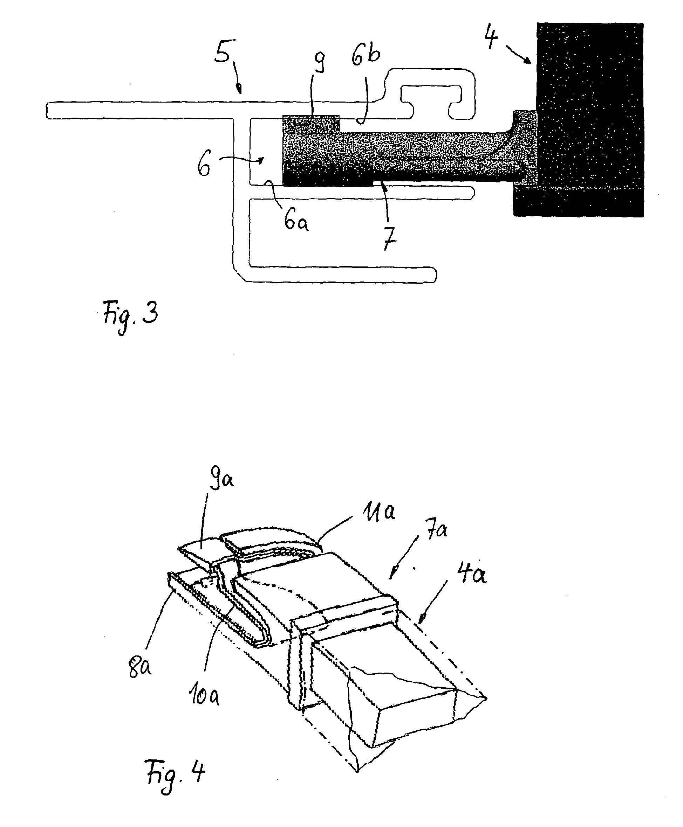

An seinem in Auszugrichtung vorderen Stirnendbereich ist das flexible Flächengebilde 3 fest mit einem Auszugprofil 4 verbunden, das formstabil gestaltet ist. Das Auszugprofil 4 weist an seinen gegenüberliegenden Stirnseiten quer zur Auszugrichtung des Flächengebildes 3 jeweils seitlich nach außen abragende Führungselemente 7 auf, die in fahrzeugfesten Längsführungen 5, 6 verschiebbar gelagert sind. Die Führungselemente 7 sind steg- oder fortsatzartig gestaltet und ragen über Seitenrandbereiche des flexiblen Flächengebildes 3 quer zur Auszugrichtung seitlich nach außen ab. Die Längsführungen 5 sind im Bereich von gegenüberliegenden Seitenwandungen des Laderaumes fahrzeugfest angeordnet und weisen jeweils eine Führungsnut 6 auf, die sich in Fahrzeuglängsrichtung über die gesamte Länge des Laderaumes erstreckt und etwa horizontal ausgerichtet ist. In der Führungsnut 6 jeder Längsführung 5 ist das entsprechende Führungselement 7 des Auszugprofiles 4 gleit- und linearbeweglich geführt. Jedes der beiden Führungselemente 7 weist gemäß den Fig. 2 und 3 einen ebenen Gleitsockel 8 auf, der mit seiner Unterseite auf einer Oberfläche 6a der Führungsnut 6 gleitbeweglich aufliegt. Der Gleitsockel 8 ist auf einer Stirnseite - in Längsrichtung der Führungsnut 6 gesehen - mit einem Rastkeil 11 versehen, der beim dargestellten Ausführungsbeispiel in Auszugrichtung frontseitig an dem Gleitsockel 8 angeformt ist. Der Rastkeil 11 ist frontseitig keilförmig gestaltet und bildet eine Anschlagnase, die in einer ausgezogenen Endposition des Auszugprofils 4 in eine entsprechende Raststellung der jeweiligen Längsführung 5 in nicht näher dargestellter Weise einrastet. Das entsprechende Rastmittel ist beweglich angeordnet und kann den Rastkeil 11 und damit auch den Gleitsockel 8 wieder freigeben, sobald es manuell oder durch einen Antrieb in Löserichtung angesteuert wird.

Auf der dem Rastkeil 11 gegenüberliegenden Stirnseite ist an dem Gleitsockel 8 ein Stützelement 9 angeformt, das als elastisch nachgiebige Zunge ausgeführt ist, die schräg nach oben und nach vorne zu dem Rastkeil 11 hin frei abragt und in geringem Abstand zu dem Rastkeil 11 endet. Die elastische Nachgiebigkeit oder Vorspannung der Stützzunge 9 wird durch eine Blattfeder 10 geschaffen oder unterstützt, die sich auf der Oberseite des Gleitsockels 8 abstützt und von unten her gegen die Stützzunge 9 drückt. Die Vorspannung der Blattfeder 10 ist so gewählt, dass die Stützzunge 9 sich vorzugsweise mit geringer Stützkraft an der als Oberseite dienenden Oberfläche 6b der Führungsnut 6 gleitbeweglich abstützt.

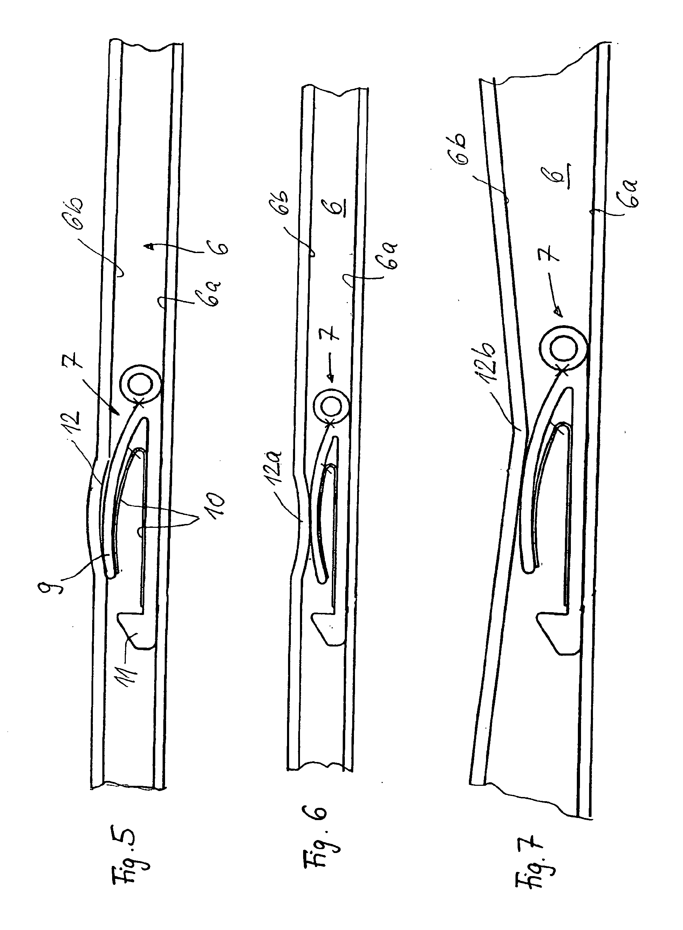

Um in einem oder in mehreren Abschnitten des Bewegungsweges jedes Führungselementes 7 die Reibwirkung und demzufolge auch eine Bremswirkung auf das jeweilige Führungselement 7 zu verändern, sind bei den Ausführungsformen nach den Fig. 5 bis 8 der Führungsnut 6 der jeweiligen Längsführung 5 Bremsmittel 12, 12a, 12b, 12c zugeordnet. Diese dienen dazu, - je nach Ausführungsform - eine Gleitreibung des Führungselementes 7 über eine bestimmte Wegstrecke zu verändern. Bei der Ausführungsform nach Fig. 5 wird die Gleitreibung im Bereich des Bremsmittels 12 reduziert. Bei den Ausführungsformen nach den Fig. 6 bis 8 wird sie im Bereich der Bremsmittel 12a bis 12c erhöht. Die Bremsmittel sind derart gestaltet, dass entweder für die entsprechende Wegstrecke die Geschwindigkeit der Gleitbewegung des Führungselementes 7 in der entsprechenden Führungsnut 6 geringfügig oder in größerem Maße reduziert oder bis auf null herabgesetzt wird. Dies bedeutet, dass die Bremsmittel 12 bis 12c die Längsbewegung des Führungselementes 7 in der entsprechenden Position auch stoppen können. Die Bremswirkung erfolgt ausschließlich durch Reibschluss. Die erfindungsgemäßen Ausgestaltungen sind insbesondere vorteilhaft für Schutzvorrichtungen, bei denen das entsprechende flexible Flächengebilde automatisch in seine kompakte Ruheposition zurückgezogen wird. Besonders vorteilhaft ist die erfindungsgemäße Lösung bei auf einer Wickelwelle auf- und abwickelbar gelagertem Flächengebilde, wobei die Wickelwelle durch eine Rückholfederanordnung in Aufwickelrichtung drehmomentbeaufschlagt ist. Durch die Bremsmittel ist es möglich, die Rückholgeschwindigkeit der Führungselemente und damit auch des Auszugprofiles 4 bzw. des Flächengebildes 3 wegabhängig zu steuern. Je nach Bedarf kann somit eine hohe Rückholkraft einer Wickelfeder ausgeglichen werden. An festgelegten Stellen und damit insbesondere an gewünschten Zwischenpositionen des Flächengebildes 3 und des Auszugprofiles 4 kann die Rückholbewegung des Flächengebildes 3 gebremst oder sogar vorübergehend gestoppt werden. Da die Bremswirkung ausschließlich auf Reibschluss beruht, kann ein durch die Bremsmittel gestopptes Auszugprofil 4 manuell auch weiterbewegt werden, indem in einfacher Weise auf das Auszugprofil eine Druckkraft in Aufwickelrichtung ausgeübt wird.

Bei der Ausführungsform nach Fig. 5 ist in der die Oberseite der Führungsnut bildenden Oberfläche 6b eine Ausbuchtung 12 nach oben vorgesehen, deren Krümmungsradius etwa einem Krümmungsradius der gekrümmten Stützzunge 9 entspricht. Je nach Ausgestaltung der Ausformung 12 kann diese zur Erhöhung der Bremswirkung oder zur Reduzierung der Bremswirkung beitragen. Falls die Krümmung der Ausbuchtung 12 der Krümmung der Stützzunge 9 entspricht, ist es möglich, dass die Stützzunge 9 im Bereich der Ausbuchtung 12 mit erheblich vergrößerter Fläche an der Oberfläche 6b anliegt, wodurch auch die Reibwirkung erhöht ist. Falls die Ausbuchtung 12 so gewählt ist, dass die Stützzunge 9 lediglich noch mit geringer Vorspannung der Blattfeder 10 oder gar ohne Vorspannung im Bereich der Ausbuchtung 12 an der Oberfläche 6b anliegt, ist die Druckbelastung, mit der die Stützzunge 9 in der Ausbuchtung 12 anliegt, gegenüber der übrigen Führungsnut 6 reduziert, so dass sich auch eine reduzierte Bremswirkung in diesem Bereich ergibt.

Bei der Ausführungsform nach Fig. 6 ist statt der Ausbuchtung 12 eine Einbuchtung 12a vorgesehen, in der die die Oberseite bildende Führungsfläche 6b ausgeformt ist und zu der die Unterseite bildenden Führungsfläche 6a der Führungsnut 6 hin abragt. Auch die Einbuchtung 12a ist muldenartig gekrümmt wie die Ausbuchtung 12, mit dem Unterschied, dass die Einbuchtung 12a konkav und die Ausbuchtung 12 konvex gekrümmt sind. Es ist unschwer erkennbar, dass durch die Einbuchtung 12a, die als Bremsmittel dient, eine Erhöhung der Reibkraft auf das Führungselement 7 auf Höhe der Einbuchtung 12a erzielt wird, so dass die Geschwindigkeit einer Gleitbewegung des Führungselementes 7 im Bereich der Einbuchtung 12a reduziert wird. Abhängig von den Reibkoeffizienten zwischen der Oberfläche 6b im Bereich der Einbuchtung 12a und der Oberseite der Stützzunge 9 kann die Geschwindigkeit des Führungselementes 7 lediglich gering oder gar bis auf null reduziert werden.

Bei der Ausführungsform nach Fig. 7 wird das gleiche Funktionsprinzip eingesetzt wie bei der Ausführungsform nach Fig. 6 mit dem Unterschied, dass sich eine obere Führungsfläche 6b der Führungsnut 6 bis zu einem Scheitelpunkt 12b linear und stetig reduziert und nach diesem Scheitelpunkt 12b sich entsprechend umgekehrt mit betragsmäßig gleicher Steigung wieder erweitert. Hierdurch wird eine allmähliche Reduzierung der Geschwindigkeit und nach Überstreichen des Scheitelpunktes 12b wieder eine sich allmählich erhöhende Geschwindigkeit des Führungselementes 7 erzielt, vorausgesetzt, dass eine Rückholkraft, die auf die Führungselemente 7 wirkt, im Wesentlichen konstant ist.

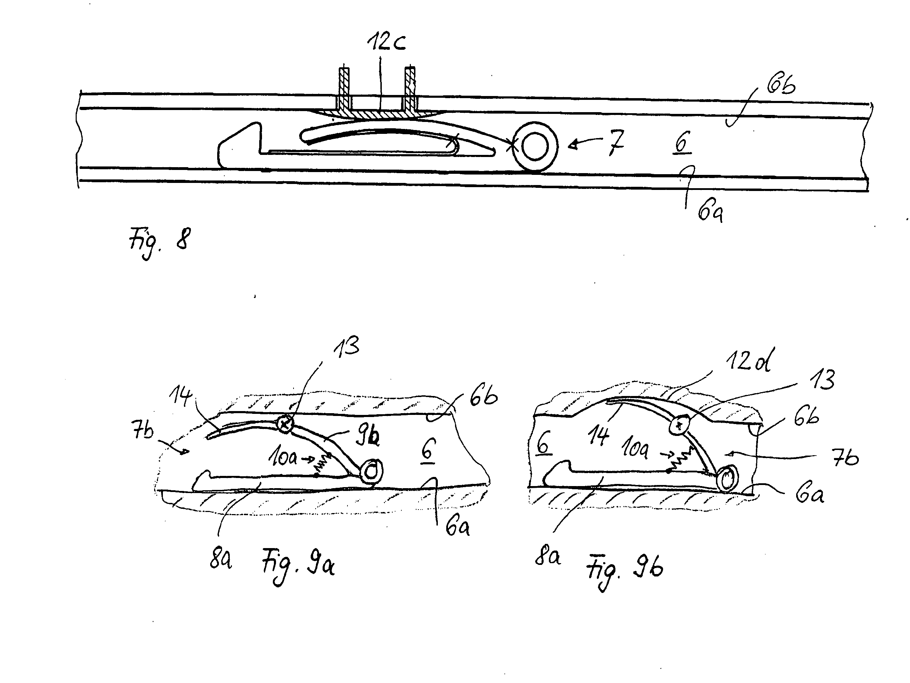

Bei den Ausführungsformen nach den Fig. 5 bis 7 sind die entsprechenden Bremsmittel 12 bis 12b einstückig in der oberen Führungsfläche 6b der Führungsnut 6 ausgeformt. Bei der Ausführungsform nach Fig. 8 wird als Bremsmittel an der oberen Führungsfläche 6b der Führungsnut 6 eine separate Bremsschwelle 12c befestigt. Die Bremsschwelle 12c ist mit wenigstens zwei Befestigungszapfen versehen, die in entsprechende Aufnahmen in der oberen Führungsfläche 6b einsteckbar sind, wie anhand der Fig. 8 erkennbar ist.

In Fig. 4 ist ein Führungselement 7a gezeigt, das stirnseitig in ein Auszugprofil 4a eingesteckt und durch Verkleben oder ähnliches in diesem befestigt ist. Das Auszugprofil 4a ist in Fig. 4 strichpunktiert angedeutet. Das Führungselement 7a ist mit einer Stützzunge 9a versehen, die durch eine in Querrichtung erstreckte Blattfeder 10a vorgespannt ist. Bei den Ausführungsformen nach den Fig. 3 und 5 bis 8 ist die jeweilige Blattfeder 10 jeweils längs der Auszugrichtung erstreckt.

Bei der Ausführungsform nach den Fig. 9a und 9b ist das Führungselement im Wesentlichen so gestaltet wie bei den zuvor beschriebenen Ausführungsformen. Es ist ebenfalls ein Gleitsockel 8a und ein nicht näher bezeichneter Rastkeil vorgesehen. Es ist auch eine schwenkbewegliche Stützzunge 9b vorgesehen, die durch eine Druckfederanordnung 10a nach oben, d.h. zur oberen Führungsfläche 6b, drehmomentbelastet ist. Die Stützzunge 9b ist - wie auch bei den zuvor beschriebenen Ausführungsformen - um eine quer zur Ausziehrichtung erstreckte Schwenkachse biegbar oder beweglich, wobei die Stützzunge 9b beim dargestellten Ausführungsbeispiel über ein Scharnier an dem Gleitsockel 8a angelenkt ist. Bei den zuvor beschriebenen Ausführungsformen nach den Fig. 3 und 5 bis 8 ist die Stützzunge mittels eines Festkörpergelenkes an dem Gleitsockel angeformt.

Wesentlicher Unterschied bei der Ausführungsform nach den Fig. 9a und 9b ist es, dass die Stützzunge 9b zwei Stützabschnitte 13, 14 mit unterschiedlichen Reibkoeffizienten aufweist. So ist im Bereich des Stützabschnittes 13 eine drehbeweglich gelagerte Stützrolle vorgesehen. Im Bereich des Stützabschnittes 14 hingegen liegt die Stützzunge durch Gleitreibung an der oberen Führungsfläche 6b der Führungsnut 6 an. Die Reibwirkung des Stützabschnittes 14 ist größer als die des Stützabschnittes 13, an dem die frei drehbewegliche Rolle lediglich über Rollreibung an der oberen Führungsfläche 6b anliegt. Der Stützabschnitt 14 liegt, solange die oberen und unteren Führungsflächen 6a, 6b der Führungsnut 6 parallel zueinander verlaufen, nicht an, sondern ragt vielmehr frei ins Innere der Führungsnut 6 ab (Fig. 9a). In diesen Bereichen liegt die Rolle 13 an der oberen Führungsfläche 6b an und rollt auf der Oberfläche der Führungsfläche 6b ab. In einem Bremsabschnitt der Führungsnut 6 hingegen ist in der oberen Führungsfläche 6b eine Ausbuchtung 12d vorgesehen, die den für die Stützzunge 9b zur Verfügung stehenden Raum nach oben erweitert. Die Ausbuchtung 12d ist kugelabschnittförmig gekrümmt analog der Ausführungsform nach Fig. 5. Die Tiefe der Ausbuchtung 12d und ihre Erstreckung in Längsrichtung der Führungsnut 6 ist so gewählt, dass wenigstens über einen Teilbereich der Länge der Ausbuchtung 12d ausschließlich der Stützabschnitt 14 gleitbeweglich an der Führungsfläche 6b und damit an der Oberfläche der Ausbuchtung 12d anliegt (Fig. 9b). In diesem Bereich wird somit eine erhöhte Reibwirkung auf das Führungselement 7b ausgeübt, wodurch eine Bremswirkung des in Rückholrichtung bewegten Führungselementes 7b erzielt wird.

Die erfindungsgemäße Lösung, wie sie anhand der zuvor beschriebenen Ausführungsformen gemäß den Fig. 1 bis 9b beschrieben wurde, eignet sich nicht nur für den Einsatz bei horizontalen Laderaumabdeckungen, sondern in gleicher Weise auch für etwa vertikal ausgerichtete Führungsanordnungen von Sonnenschutzrollos, von Glasdachbeschattungen, von Trennnetzen und ähnlichem.

## Patentansprüche

1. Schutzvorrichtung für einen Innenraum eines Kraftfahrzeugs mit einem zwischen einer kompakt abgelegten Ruheposition und wenigstens einer zumindest teilweise ausgezogenen Funktionsposition beweglich gelagerten, flexiblen Flächengebilde (3), das wenigstens abschnittsweise mittels Führungselementen (7, 7a, 7b) in fahrzeugseitigen Längsführungen (5, 6) für eine Vor- oder Rückbewegung beidseitig geführt ist, **dadurch gekennzeichnet, dass** den Führungselementen (7, 7a, 7b) Bremsmittel (12 bis 12d) zugeordnet sind, die zumindest über einen Teilabschnitt eines Vor- oder Rückweges des Flächengebildes (3) eine Erhöhung eines Reibschlusses zwischen den Führungselementen (7 bis 7b) und den Längsführungen (5, 6) bewirken.

2. Schutzvorrichtung nach Anspruch 1, **dadurch gekennzeichnet, dass** die Bremsmittel (12 bis 12d) den Längsführungen (5, 6) und/oder den Führungselementen zugeordnet sind.

3. Schutzvorrichtung nach Anspruch 1, **dadurch gekennzeichnet, dass** die Bremsmittel abschnittsweise Veränderungen (12, 12a, 12b, 12d) von Führungsquerschnitten der Längsführungen (5, 6) umfassen.

4. Schutzvorrichtung nach Anspruch 1, **dadurch gekennzeichnet, dass** die Bremsmittel abschnittsweise Veränderungen der Reibkoeffizienten von Führungsflächen der Längsführungen umfassen.

5. Schutzvorrichtung nach Anspruch 1, **dadurch gekennzeichnet, dass** die den Führungselementen (7, 7b) zugeordneten Bremsmittel (12 bis 12d) beweglich angeordnete Stützteile (9 bis 9b) umfassen, die an entsprechenden Führungsflächen (6b) der Längsführungen (5, 6) anliegen, und die mit voneinander beabstandeten Bereichen (13, 14) unterschiedlicher Reibkoeffizienten versehen sind.

6. Schutzvorrichtung nach Anspruch 5, **dadurch gekennzeichnet, dass** die unterschiedlichen Reibkoeffizienten der Stützteilbereiche (13, 14) durch Gleitreibungs- und Rollreibungsbereiche gebildet sind.

7. Schutzvorrichtung nach Anspruch 5 oder 6, **dadurch gekennzeichnet, dass** die beweglich gelagerten Stützteile (9, 9a, 9b) in Anlagerichtung zu den Führungsflächen (6b) der Längsführungen (5, 6) federkraftbeaufschlagt sind.

8. Schutzvorrichtung nach einem der vorhergehenden Ansprüche, **dadurch gekennzeichnet, dass** die Bremsmittel (12 bis 12d) mit den Längsführungen (5, 6) einstückig oder zu diesen getrennt ausgeführt sind.

9. Führungsanordnung für eine Schutzvorrichtung nach einem der vorhergehenden Ansprüche mit wenigstens einem Führungselement (7 bis 7b) und wenigstens einer Längsführung (5, 6), **dadurch gekennzeichnet, dass** Bremsmittel (12 bis 12d, 13, 14) vorgesehen sind, die wenigstens in einer Bewegungsrichtung des wenigstens einen Führungselementes (7 bis 7b) in der Längsführung (5, 6) wirksam sind und dem Führungselement (7 bis 7b) und/oder der Längsführung (5, 6) zugeordnet sind.

## Claims

1. Protection device for an interior of a motor vehicle with a flexible planar structure (3) movably mounted between a compactly stowed rest position and at least one at least partially extended function position, the planar structure being guided on both sides at least in some sections by guide elements (7, 7a, 7b) inside longitudinal guides (5, 6) on the vehicle side for a forward and rearward movement, **characterized in that** braking means (12 to 12d) are assigned to the guide elements (7, 7a, 7b) that achieve at least over a partial section of a forward or rearward travel of the planar structure (3) an increase in a friction grip between the guide elements (7 to 7b) and the longitudinal guides (5,6).

2. Protection device according to Claim 1, **characterized in that** the braking means (12 to 12d) are assigned to the longitudinal guides (5, 6) and/or to the guide elements.

3. Protection device according to Claim 1, **characterized in that** the braking means comprise in some sections changes (12, 12a, 12b, 12d) in the guide cross-sections of the longitudinal guides (5, 6).

4. Protection device according to Claim 1, **characterized in that** the braking means comprise in some sections changes in the friction coefficients of guide surfaces of the longitudinal guides.

5. Protection device according to Claim 1, **characterized in that** the braking means (12 to 12d) assigned to the guide elements (7, 7b) comprise movably arranged supporting parts (9 to 9b) contacting corresponding guide surfaces (6b) of the longitudinal guides (5, 6) and provided with areas (13, 14) with differing friction coefficients at a distance from one another.

6. Protection device according to Claim 5, **characterized in that** the different friction coefficients of the supporting part areas (13, 14) are formed by sliding friction and rolling friction areas.

7. Protection device according to Claim 5 or 6, **characterized in that** the movably mounted supporting parts (9, 9a, 9b) are subjected to a spring force in the direction of contact with the guide surfaces (6b) of the longitudinal guides (5, 6).

8. Protection device according to one of the preceding claims, **characterized in that** the braking means (12 to 12d) are designed in one piece with the longitudinal guides (5, 6) or separate from these.

9. Guide assembly for a protection device according to one of the preceding claims with at least one guide element (7 to 7b) and at least one longitudinal guide (5, 6), **characterized in that** braking means (12 to 12d, 13, 14) are provided that are effective at least in one movement direction of the at least one guide element (7 to 7b) and are assigned to the guide element (7 to 7b) and/or the longitudinal guide (5, 6).

## Revendications

1. Dispositif de protection pour un espace intérieur d'un véhicule automobile, avec une structure plane souple (3) logée de manière mobile entre une position de repos rangée de manière compacte et au moins une position fonctionnelle déroulée du moins partiellement, et qui, pour effectuer un mouvement d'avance et de recul, est guidée des deux côtés au moins en partie au moyen d'éléments de guidage (7, 7a, 7b) dans des coulisses longitudinales (5, 6) du véhicule, **caractérisé en ce qu'**aux éléments de guidage (7, 7a, 7b) sont associés des moyens de freinage (12 à 12d) qui, au moins sur une partie d'une course d'avance ou de recul de la structure plane (3), provoquent une élévation d'un frottement entre les éléments de guidage (7 à 7b) et les coulisses longitudinales (5, 6).

2. Dispositif de protection selon la revendication 1, **caractérisé en ce que** les moyens de freinage (12 à 12d) sont associés aux coulisses longitudinales (5, 6) et/ou aux éléments de guidage.

3. Dispositif de protection selon la revendication 1, **caractérisé en ce que** les moyens de freinage comportent en partie des modifications (12, 12a, 12b, 12d) des sections transversales des coulisses longitudinales (5, 6).

4. Dispositif de protection selon la revendication 1, **caractérisé en ce que** les moyens de freinage comportent en partie des modifications des coefficients de frottement des surfaces de guidage des coulisses longitudinales.

5. Dispositif de protection selon la revendication 1, **caractérisé en ce que** les moyens de freinage (12 à 12d) associés aux éléments de guidage (7, 7b) comprennent des pièces d'appui (9 à 9b) disposées de manière mobile qui s'appuient sur des surfaces de guidage correspondantes (6b) des coulisses longitudinales (5, 6), et sont munies de zones distantes l'une de l'autre (13, 14) présentant des coefficients de frottement différents.

6. Dispositif de protection selon la revendication 5, **caractérisé en ce que** les différents coefficients de frottement des zones des pièces d'appui (13, 14) sont engendrés par des zones de frottement par glissement et des zones de frottement par roulement.

7. Dispositif de protection selon la revendication 5 ou 6, **caractérisé en ce que** les pièces d'appui (9, 9a, 9b) logées de manière mobile sont soumises à la force d'un ressort dans le sens d'appui vers les surfaces de guidage (6b) des coulisses longitudinales (5, 6).

8. Dispositif de protection selon l'une des revendications précédentes, **caractérisé en ce que** les moyens de freinage (12 à 12d) forment une seule pièce avec les coulisses longitudinales (5, 6) ou sont réalisés séparément de celles-ci.

9. Dispositif de guidage pour un dispositif de protection selon l'une des revendications précédentes, avec au moins un élément de guidage (7 à 7b) et au moins une coulisse longitudinale (5, 6), **caractérisé en ce que** sont prévus des moyens de freinage (12 à 12d, 13, 14) qui, au moins dans un sens de déplacement de l'au moins un élément de guidage (7 à 7b), agissent dans la coulisse longitudinale (5, 6) et sont associés à l'élément de guidage (7 à 7b) et/ou à la coulisse longitudinale (5, 6).
